# DEMANDE DE BREVET EUROPEEN

(11) **EP 4 458 893 A1**
(43) Date de publication de la demande: **06.11.2024**
(21) Numéro de dépôt: 23171777.8
(22) Date de dépôt: 05.05.2023
(51) Int. Cl.: C08K 3/08, C08K 3/22, C08K 7/14, G04B 37/22

(54) **ARTICLE EN MATERIAU HAUTE DENSITE ET PROCEDE DE FABRICATION D'UN TEL ARTICLE**

(71) Demandeur: BIWI S.A., 2855 Glovelier (CH)
(72) Inventeur: BOURQUARD, Pascal Pierre Philippe, 2856 Boécourt (CH)
(74) Mandataire: Bovard SA Neuchâtel

(57) **Abrégé**

La présente invention concerne un article réalisé dans un matériau présentant une densité supérieure à 2 g/cm³, ledit matériau comprenant en poids pour un total de 100% , au moins une charge métallique et/ou céramique obtenue à partir d'une poudre dans une matière métallique et/ou céramique ayant une densité supérieure ou égale à 3 g/cm³, de préférence supérieure ou égale à 5 g/cm³, dans une quantité comprise entre 30% et 85% en poids, entre 15% et 50% en poids d'au moins un polyphtalamide, entre 0% et 40% en poids d'au moins une charge de renfort, et optionnellement entre 0% et 10% en poids d'un agent colorant, ledit matériau étant sans agent de couplage entre le polyphtalamide et la charge métallique et/ou céramique.

L'invention concerne également un procédé de fabrication d'un tel article.

## Description

### Domaine technique

La présente invention se rapporte à un article, tel qu'un composant horloger ou de bijouterie, réalisé dans un matériau haute densité.

L'invention concerne également un procédé de fabrication d'un tel article.

### Etat de la technique

Il est déjà connu de réaliser des articles, tels que des composants utilisés dans la bijouterie, et plus spécifiquement dans l'horlogerie, dans un matériau plastique lourd ou à haute densité. Un tel article est par exemple décrit dans la demande EP 4001356. Cet article, tel qu'une carrure, est réalisé à partir d'un mélange comprenant en poids 72% de poudre métallique, 27% de polyamide PA11, et 1% d'un agent de couplage à base de polyuréthane, ou d'un mélange comprenant en poids 71% de poudre d'oxyde de zirconium, 28% de polyamide PA11, et 1% d'un agent de couplage à base de polyuréthane.

De tels mélanges comprennent un agent de couplage utilisé pour assurer la liaison entre le polymère et la charge, ce qui permet d'augmenter la cohésion du matériau obtenu et par conséquent d'améliorer les propriétés mécaniques dudit matériau.

Toutefois, l'agent de couplage a pour inconvénient de devoir être choisi pour être chimiquement et physiquement compatible à la fois avec le polymère et la charge. Le choix peut donc être limité. De plus, l'agent de couplage peut présenter une faible stabilité thermique. De ce fait, l'agent de couplage dans le mélange peut se dégrader à partir d'une certaine température lors de la fabrication de l'article de sorte qu'il devient inefficace, entrainant une perte des propriétés mécaniques du matériau recherchées. La dégradation de l'agent de couplage peut également entraîner des décolorations ou changements de couleurs perceptibles d'une partie à l'autre de l'article, nuisant à l'aspect esthétique de l'article.

La présente invention vise à remédier à ces inconvénients en proposant un article réalisé dans un matériau à haute densité qui présente notamment de bonnes propriétés mécaniques sans utiliser d'agent de couplage.

### Divulgation de l'invention

A cet effet, l'invention concerne un article réalisé dans un matériau présentant une densité supérieure à 2 g/cm³ et de préférence comprise entre 2.0 g/cm³ et 5.2 g/cm³, ledit matériau comprenant en poids pour un total de 100% :
- au moins une charge métallique et/ou céramique obtenue à partir d'une poudre dans une matière métallique et/ou céramique ayant une densité supérieure ou égale à 3 g/cm³, de préférence supérieure ou égale à 5 g/cm³, dans une quantité comprise entre 30% et 85% en poids, bornes comprises,
- entre 15% et 50% en poids, bornes comprises, d'au moins un polyphtalamide,
- entre 0% et 40% en poids, bornes comprises, d'au moins une charge de renfort, et
- optionnellement entre 0% et 10% en poids, bornes comprises, d'un agent colorant,
ledit matériau étant sans agent de couplage entre le polyphtalamide et la charge métallique et/ou céramique.

D'une manière avantageuse, la charge métallique a une densité supérieure ou égale à 3 g/cm³, de préférence supérieure ou égale à 5 g/cm³, et plus préférentiellement supérieure ou égale à 7 g/cm³, et peut être obtenue à partir d'une poudre dans une matière métallique choisie parmi l'or, le tungstène, le bronze et l'acier.

D'une manière avantageuse, la charge céramique a une densité supérieure ou égale à 3 g/cm³, de préférence supérieure ou égale à 5 g/cm³, et peut être obtenue à partir d'une poudre d'oxyde de zinc (ZnO).

D'une manière avantageuse, l'article selon l'invention peut constituer un composant horloger ou de bijouterie.

La présente invention concerne également un procédé de fabrication d'un article tel que défini ci-dessus, comprenant les étapes suivantes :
1) préparer un mélange destiné à former le matériau de l'article, ledit mélange comprenant :
   - au moins une poudre dans une matière métallique et/ou céramique ayant une densité supérieure ou égale à 3 g/cm³, de préférence supérieure ou égale à 5 g/cm³, destinée à former au moins une charge métallique et/ou céramique dans une quantité comprise entre 30% et 85% en poids, bornes comprises
   - entre 15% et 50% en poids, bornes comprises, d'au moins un polyphtalamide,
   - 0% d'agent de couplage entre le polyphtalamide et la charge métallique et/ou céramique,
   - entre 0% et 40% en poids, bornes comprises, d'au moins une charge de renfort, et
   - optionnellement entre 0% et 10% en poids, bornes comprises, d'un agent colorant,
2) réaliser l'article par moulage du mélange obtenu à l'étape 1) pour obtenir la forme désirée.

D'autres caractéristiques et avantages de la présente invention apparaîtront à la lecture de la description détaillée suivante de plusieurs modes de réalisation de l'invention, donnés à titre d'exemples non limitatifs.

### Mode(s) de réalisation de l'invention

La présente invention concerne un article réalisé dans un matériau présentant une densité supérieure à 2 g/cm³ et de préférence comprise entre 2.0 g/cm³ et 5.2 g/cm³ ledit matériau comprenant en poids pour un total de 100% :
- au moins une charge métallique et/ou céramique obtenue à partir d'une poudre dans une matière métallique et/ou céramique ayant une densité supérieure ou égale à 3 g/cm³, de préférence supérieure ou égale à 5 g/cm³, dans une quantité comprise entre 30% et 85% en poids, bornes
- entre 15% et 50% en poids, bornes comprises, d'au moins un polyphtalamide,
- entre 0% et 40% en poids, bornes comprises, d'au moins une charge de renfort, et
- optionnellement entre 0% et 10% en poids, bornes comprises, d'un agent colorant.

D'une manière particulièrement avantageuse, ledit matériau utilisé pour réaliser l'article selon l'invention est sans agent de couplage entre le polyphtalamide et la charge métallique et/ou céramique. Cela signifie que la cohésion entre le polyphtalamide et la charge métallique et/ou céramique est obtenue uniquement par des liaisons chimiques entre le polyphtalamide et la charge métallique et/ou céramique, et notamment des liaisons de coordination entre la charge métallique/céramique et le doublet non liant de l'atome d'oxygène de la fonction C=O du groupement amide du polyphtalamide, ainsi que des liaisons hydrogène entre des groupements OH en surface de la charge métallique et/ou céramique, qui présente une oxydation de surface, et la fonction C=O du groupement amide du polyphtalamide. Aucun agent de couplage n'est nécessaire.

Selon un mode de réalisation, la quantité de charge métallique et/ou céramique est comprise entre 40% et 85% en poids, bornes comprises, la quantité de polyphtalamide est comprise entre 15% et 45 % en poids, bornes comprises, et la quantité de charge de renfort est comprise entre 0% et 40% en poids, bornes comprises.

Selon un autre mode de réalisation, la quantité de charge métallique et/ou céramique est comprise entre 50% et 85% en poids, bornes comprises, la quantité de polyphtalamide est comprise entre 15% et 30 % en poids, bornes comprises, et la quantité de charge de renfort est comprise entre 0% et 35% en poids, bornes comprises.

Selon un autre mode de réalisation, la quantité de charge métallique et/ou céramique est comprise entre 70% et 85% en poids, bornes comprises, la quantité de polyphtalamide est comprise entre 15% et 30 % en poids, bornes comprises, et la quantité de charge de renfort est comprise entre 0% et 15% en poids, bornes comprises.

Selon un autre mode de réalisation, la quantité de charge métallique et/ou céramique est comprise entre 80% et 85% en poids, bornes comprises, la quantité de polyphtalamide est comprise entre 15% et 20 % en poids, bornes comprises, et la quantité de charge de renfort est comprise entre 0% et 5% en poids, bornes comprises.

De préférence, la quantité de charge métallique est comprise entre 40% et 85% en poids, bornes comprises, la quantité de polyphtalamide est comprise entre 15% et 45 % en poids, bornes comprises, et la quantité de charge de renfort est comprise entre 0% et 40% en poids, bornes comprises.

De préférence, la quantité de charge céramique est comprise entre 40% et 70% en poids, bornes comprises, la quantité de polyphtalamide est comprise entre 15% et 30 % en poids, bornes comprises et la quantité de charge de renfort est comprise entre 0% et 40% en poids, bornes comprises.

Les pourcentages respectifs des différents composants du matériau sont tels qu'additionnés entre eux, ils ne dépassent pas les 100%.

La charge de renfort ne rentre pas dans la définition de la charge métallique et/ou céramique selon l'invention. La charge de renfort permet d'augmenter la tenue mécanique du matériau. La charge de renfort est plus particulièrement utilisée lorsque la quantité de charge métallique et/ou céramique doit être limitée, de sorte que la somme des quantités de charge métallique et/ou céramique et de charge de renfort est comprise de préférence entre 50% et 85% en poids, bornes comprises, par rapport au poids total de la composition du matériau.

Quels que soient les modes de réalisation, d'une manière avantageuse, la charge métallique a une densité supérieure ou égale à 3 g/cm³, de préférence supérieure ou égale à 5 g/cm³, et plus préférentiellement supérieure ou égale à 7 g/cm³, et est obtenue à partir d'une poudre dans une matière métallique choisie parmi l'or, le tungstène, le bronze et l'acier inoxydable.

Les poudres de bronze peuvent présenter une densité de 8.8 g/cm³, de sorte qu'en mélange avec le polyphtalamide, le matériau obtenu peut présenter une densité jusqu'à 5 g/cm³.

Les poudres de tungstène peuvent présenter une densité de 19.3 g/cm³, de sorte qu'en mélange avec le polyphtalamide, le matériau obtenu peut présenter une densité jusqu'à 11 g/cm³.

Les poudres d'acier inoxydable peuvent présenter une densité de 7.98 g/cm³, de sorte qu'en mélange avec le polyphtalamide, le matériau obtenu peut présenter une densité jusqu'à 4 g/cm³.

Les poudres d'or peuvent présenter une densité de 19.3 g/cm³, de sorte qu'en mélange avec le polyphtalamide, le matériau obtenu peut présenter une densité jusqu'à 11 g/cm³.

Quels que soient les modes de réalisation, d'une manière avantageuse, la charge céramique a une densité supérieure ou égale à 3 g/cm³, de préférence supérieure ou égale à 5 g/cm³, et est obtenue de préférence à partir d'une poudre d'oxyde de zinc (ZnO).

Les poudres de ZnO peuvent présenter une densité de 5.6 g/cm³, de sorte qu'en mélange avec le polyphtalamide, le matériau obtenu peut présenter une densité jusqu'à environ 2.8 g/cm³.

Dans la présente description, la densité de la charge métallique ou céramique indiquée correspond à la densité apparente (norme ISO 3923).

Les charges métalliques et céramiques peuvent être utilisées en mélange, les quantités indiquées étant alors valables pour la quantité globale de charges métalliques et céramiques.

Quels que soient les modes de réalisation, d'une manière avantageuse, le polyphtalamide peut être biosourcé. Un tel polyphtalamide est issu en grande partie de matières premières renouvelables provenant de cultures non alimentaires nécessitant pas ou peu de pesticides, à empreinte carbone réduite. Un tel polyphtalamide est par exemple biosourcé à base d'huile de Ricin, tel que le Rilsan^{®} HT commercialisé par Arkema.

De préférence, le polyphtalamide est une résine thermoplastique qui présente une densité d'environ 1.1 g/cm³. Grâce à sa structure partiellement aromatique, il présente une température de fusion supérieure à celle du polyamide PA11, de très bonnes propriétés mécaniques (module d'élasticité, résistance à la traction et à la flexion), une meilleure résistance chimique, une excellente stabilité thermique, ainsi qu'une absorption d'eau réduite par rapport au PA11.

De plus, le polyphtalamide permet avantageusement d'obtenir des combinaisons polymère/charge qui présentent toutes les propriétés requises pour l'application recherchée sans aucun agent de couplage.

Quels que soient les modes de réalisation, la charge de renfort peut être choisie parmi des fibres de verre, des fibres de carbone, des fibres d'aramide, des billes de verre, des nanotubes de carbone ou de graphène, et leurs mélanges.

L'agent colorant peut être un colorant et/ou un pigment, qui peut être sous forme de poudre ou de liquide.

Le matériau peut comprendre également d'autres composants, tels que d'autres types de charges, telles que des charges minérales différentes de la charge céramique utilisée avec le polyphtalamide (craie, calcaire, wollastonite, lin, fibres naturelles), des agents de mise en oeuvre, des agents protecteurs UV, des agents ignifugeants, des lubrifiants, etc.

Selon les modes de réalisation, le matériau peut comprendre par exemple 80% en poids de tungstène et 20% en poids de polyphtalamide, ou 70% en poids de ZnO et 30% en poids de polyphtalamide, ou 58% en poids de ZnO, 12% de fibres de verre et 30 % en poids de polyphtalamide.

D'une manière avantageuse, l'article selon l'invention constitue un composant horloger ou de bijouterie. Notamment, le composant horloger ou de bijouterie peut par exemple constituer une carrure, un maillon de bracelet, une lunette, un poussoir, une couronne, un composant interne d'une montre (réhaut, index...), etc.

L'invention concerne également un procédé de fabrication d'un tel article, le procédé comprenant les étapes suivantes :
1) préparer un mélange destiné à former le matériau de l'article, ledit mélange comprenant :
   - au moins une poudre dans une matière métallique et/ou céramique ayant une densité supérieure ou égale à 3 g/cm³, de préférence supérieure ou égale à 5 g/cm³, destinée à former au moins une charge métallique et/ou céramique, telle que décrite ci-dessus, dans une quantité comprise entre 30% et 85% en poids, bornes comprises,
   - entre 15% et 50% en poids, bornes comprises, d'au moins un polyphtalamide,
   - 0% d'agent de couplage entre le polyphtalamide et la charge métallique et/ou céramique,
   - entre 0% et 40% en poids, bornes comprises, d'au moins une charge de renfort, et
   - optionnellement entre 0% et 10% en poids, bornes comprises, d'un agent colorant,
2) réaliser l'article par moulage du mélange obtenu à l'étape 1) pour obtenir la forme désirée.

La poudre dans une matière métallique et/ou céramique utilisée à l'étape 1) du procédé de l'invention est choisie pour permettre l'établissement de liaisons chimiques avec le polyphtalamide, telles que des liaisons de coordination et des liaisons hydrogène, de manière à garantir la cohésion du matériau obtenu, sans l'aide d'agent de couplage. Ainsi, la poudre utilisée peut présenter dans sa structure cristalline des défauts intrinsèques créant des lacunes électroniques pour établir des liaisons de coordination entre la charge métallique/céramique et le doublet non liant de l'atome d'oxygène de la fonction C=O du groupement amide du polyphtalamide. La poudre peut aussi présenter une oxydation de surface de manière à présenter en surface des groupements OH permettant d'établir des liaison hydrogène avec la fonction C=O du groupement amide du polyphtalamide.

Avantageusement, le moulage mis en oeuvre à l'étape 2) peut s'effectuer par tout procédé connu, tel que l'injection, le moulage, l'extrusion, l'impression 3D.

Selon un mode de réalisation avantageux, le procédé de l'invention peut comprendre, entre l'étape 1) et l'étape 2), une étape d'extrusion du mélange obtenu à l'étape 1) pour former des granulés. Puis, l'étape 2) consiste à mouler par injection les granulés obtenus pour former l'article souhaité. Un étuvage des granulés peut être prévu, pendant plusieurs heures, à 80-100°C. Le procédé de l'invention peut comprendre après l'étape 2) une étape de finition. Par exemple une telle étape peut consister en un décarottage par fraisage ou tournage ayant pour fonction d'enlever des parties non-fonctionnelles sur les articles.

### Exemples

Des articles selon l'invention ont été réalisés avec différentes compositions de polyphtalamide (PPA Rilsan^{®} HT) et de charge métallique (tungstène) ou céramique (ZnO) avec ou sans charge de renfort (fibres de verre).

Différentes propriétés mécaniques ont été mesurées.

Les résultats obtenus sont indiqués dans le tableau I suivant :

**Tableau I**

| | Norme | PPA + 70% de poudres de ZnO | PPA + 58% de poudres de ZnO + 12% de Fibres de Verre | PPA + 77% de poudres de Tungstène | PPA + 83% de poudres de Tungstène |
|---|---|---|---|---|---|
| Densité | ISO 1183 | 2.6 | 2.34 | 3,91 | 5.05 |
| Module de rigidité en traction (GPa) | ISO 527 | 5,5 | 9.5 | 3.5 | 4.5 |
| Résistance à la rupture (MPa) | ISO 527 | 65 | 100 | 65 | 65 |
| Allongement à la rupture (%) | ISO 527 | 1.6 | 1.5 | 3.9 | 2.8 |
| Résistance à l'impact - éprouvette entaille - 23 °C ; 50 % RH (kJ/m²) | ISO 180 | 6 | 5 | 8 | 9 |
| Résistance à l'impact - éprouvette non entaille - 23 °C ; 50 % RH (kJ/m²) | ISO 180 | 45 | 30 | 32 | 25 |

Le tableau I ci-dessus montre que l'article selon l'invention dans un matériau comprenant un polyphtalamide et aucun agent de couplage présente un module de rigidité en traction ainsi qu'une résistance à la rupture supérieurs aux valeurs présentées par un article obtenu avec un PA11 et un agent de couplage, tels que décrits dans la demande EP 4001356.

Le matériau ne comprenant aucun agent de couplage, il n'y a aucun risque de dégradation de ce dernier.

Par ailleurs, l'utilisation de charges de renfort permet d'obtenir des propriétés mécaniques similaires voire meilleures que celles obtenues avec un matériau sans charge de renfort, tout en diminuant la quantité de charge céramique et/ou métallique.

## Revendications

1. Article réalisé dans un matériau présentant une densité supérieure à 2 g/cm³ et de préférence comprise entre 2 g/cm³ et 5.2 g/cm³, ledit matériau comprenant en poids pour un total de 100% :
- au moins une charge métallique et/ou céramique obtenue à partir d'une poudre dans une matière métallique et/ou céramique ayant une densité supérieure ou égale à 3 g/cm³, de préférence supérieure ou égale à 5 g/cm³ , dans une quantité comprise entre 30% et 85% en poids, bornes comprises
- entre 15% et 50% en poids, bornes comprises, d'au moins un polyphtalamide,
- entre 0% et 40% en poids, bornes comprises, d'au moins une charge de renfort, et
- optionnellement entre 0% et 10% en poids, bornes comprises, d'un agent colorant,
ledit matériau étant sans agent de couplage entre le polyphtalamide et la charge métallique et/ou céramique.

2. Article selon la revendication 1, **caractérisé en ce que** la quantité de charge métallique et/ou céramique est comprise entre 40% et 85% en poids, bornes comprises, la quantité de polyphtalamide est comprise entre 15% et 45 % en poids, bornes comprises, et la quantité de charge de renfort est comprise entre 0% et 40% en poids, bornes comprises.

3. Article selon l'une des revendications précédentes, **caractérisé en ce que** la quantité de charge métallique et/ou céramique est comprise entre 50% et 85% en poids, bornes comprises, la quantité de polyphtalamide est comprise entre 15% et 30 % en poids, bornes comprises, et la quantité de charge de renfort est comprise entre 0% et 35% en poids, bornes comprises.

4. Article selon l'une des revendications précédentes, **caractérisé en ce que** la quantité de charge métallique et/ou céramique est comprise entre 70% et 85% en poids, bornes comprises, la quantité de polyphtalamide est comprise entre 15% et 30 % en poids, bornes comprises, et la quantité de charge de renfort est comprise entre 0% et 15% en poids, bornes comprises.

5. Article selon l'une des revendications précédentes, **caractérisé en ce que** la quantité de charge métallique et/ou céramique est comprise entre 80% et 85% en poids, bornes comprises, la quantité de polyphtalamide est comprise entre 15% et 20 % en poids, bornes comprises, la quantité de charge de renfort est comprise entre 0% et 5% en poids, bornes comprises.

6. Article selon l'une des revendications précédentes, **caractérisé en ce que** la somme des quantités de charge métallique et/ou céramique et de charge de renfort est comprise entre 50% et 85% en poids, bornes comprises.

7. Article selon l'une des revendications précédentes, **caractérisé en ce que** la charge métallique a une densité supérieure ou égale à 3 g/cm³, de préférence supérieure ou égale à 5 g/cm³ , et plus préférentiellement supérieure ou égale à 7 g/cm³, et est obtenue à partir d'une poudre dans une matière métallique choisie parmi l'or, le tungstène, le bronze et l'acier.

8. Article selon l'une des revendications précédentes, **caractérisé en ce que** la charge céramique a une densité supérieure ou égale à 3 g/cm³, de préférence supérieure ou égale à 5 g/cm³ , et est obtenue à partir d'une poudre d'oxyde de zinc (ZnO).

9. Article selon l'une des revendications précédentes, **caractérisé en ce que** la charge de renfort est choisie parmi des fibres de verre, des fibres de carbone, des fibres d'aramide, des billes de verre, des nanotubes de carbone ou de graphène, et leurs mélanges.

10. Article selon l'une des revendications précédentes, **caractérisé en ce que** le polyphtalamide est biosourcé.

11. Article selon l'une des revendications précédentes, **caractérisé en ce qu'**il constitue un composant horloger ou de bijouterie.

12. Procédé de fabrication d'un article selon l'une des revendications précédentes, comprenant les étapes suivantes :
1) préparer un mélange destiné à former le matériau de l'article, ledit mélange comprenant :
- au moins une poudre dans une matière métallique et/ou céramique ayant une densité supérieure ou égale à 3 g/cm³, de préférence supérieure ou égale à 5 g/cm³, destinée à former au moins une charge métallique et/ou céramique dans une quantité comprise entre 30% et 85% en poids, bornes comprises
- entre 15% et 50% en poids, bornes comprises, d'au moins un polyphtalamide,
- 0% d'agent de couplage entre le polyphtalamide et la charge métallique et/ou céramique,
- entre 0% et 40% en poids, bornes comprises, d'au moins une charge de renfort, et
- optionnellement entre 0% et 10% en poids, bornes comprises, d'un agent colorant,
2) réaliser l'article par moulage du mélange obtenu à l'étape 1) pour obtenir la forme désirée.

13. Procédé selon la revendication 12, dans lequel le moulage mis en oeuvre à l'étape 2) s'effectue par un procédé choisi parmi l'injection, le moulage, l'extrusion, l'impression 3D.
